# EUROPÄISCHE PATENTSCHRIFT

(11) **EP 0 951 493 B1**
(45) Veröffentlichungstag und Bekanntmachung des Hinweises auf die Patenterteilung: **27.06.2001**
(21) Anmeldenummer: 97954425.1
(22) Anmeldetag: 18.12.1997
(51) Int. Cl.: C08G 18/10, C08G 18/76, C09J 175/04

(54) **MONOMERENARMES PU-PREPOLYMER**
MONOMER-POOR POLYURETHANE PREPOLYMER
PREPOLYMER POLYURETHANE PAUVRE EN MONOMERES

(30) Priorität: 02.01.1997 DE 19700014
(43) Veröffentlichungstag der Anmeldung: 27.10.1999
(73) Patentinhaber: Henkel Kommanditgesellschaft auf Aktien, 40191 Düsseldorf (DE)
(72) Erfinder: BOLTE, Gerd, D-40789 Monheim (DE); HENKE, Günter, D-41470 Neuss (DE); KRÜDENSCHEIDT, Markus, D-40764 Langenfeld (DE); OMORUYI, Astrid, D-40468 Düsseldorf (DE)
(86) Internationale Anmeldenummer: EP9707131
(87) Internationale Veröffentlichungsnummer: WO9829466

(56) Entgegenhaltungen:
- EP-A- 0 005 473
- EP-A- 0 118 065
- US-A- 4 544 763
- US-A- 4 623 709

## Beschreibung

Die Erfindung betrifft ein monomerenarmes PU-Prepolymer mit freien NCO-Gruppen, welches aus mehrfunktionellen Alkoholen und Diissocyanaten mit unterschiedlicher Reaktivität herstellbar ist, sowie dessen Herstellung und Verwendung.

Derartige PU-Prepolymere werden in der EP 0 150 444 beschrieben. Sie werden hergestellt, indem man
- in einem ersten Reaktionsschritt 2,4-Toluylen-diisocyanat in Abwesenheit anderer Diisocyanate mit mehrfunktionellen Alkohlen im Verhältnis OH : NCO zwischen 4 und 0,55 umsetzt und nach Abreaktion praktisch aller höher reaktiven NCO-Gruppen mit einem Teil der vorhandenen OH-Gruppen
- in einem zweiten Reaktionsschritt ein im Vergleich zu den weniger reaktiven NCO-Gruppen des 2,4 Toluylen-diisocyanates aus Reaktionssschritt, 1 reaktiveres symmetrisches, dicyclisches Diisocyanat äquimolar oder im Überschuß, bezogen auf noch freie OH-Gruppen in einer Menge von 5 bis 80 Gew.-%, bezogen auf die Gesamtmenge der Diisocyanate in Stufe 1 und 2, zusetzt,
wobei gewünschtenfalls übliche Katalysatoren und/oder erhöhte Temperaturen angewendet werden.
Dieses bekannte PU-Prepolymer hat zwar einen niedrigen Gehalt an Monomeren, nämlich nur 1 - 2,5 %, wie die Beispiele zeigen. Aber sie härten in vielen Fällen nicht schnell genug aus.

Die erfindungsgemäße Aufgabe besteht demnach darin, ein monomerenarmes PU-Prepolymer mit freien NCO-Gruppen zur Verfügung zu stellen, welches eine schnellere, aber ausreichend sichere Verarbeitung erlaubt.

Die erfindungsgemäße Lösung ist den Patentansprüchen zu entnehmen. Sie besteht in einem monomerenarmen PU-Prepolymer mit freien NCO-Gruppen, welches aus mehrwertigen Alkoholen und aus mindestens zwei Diisocyanaten mit unterschiedlicher Reaktivität herstellbar ist und dadurch gekennzeichnet ist, daß das Verhältnis der NCO-Gruppen des partiell reaktionsträgeren Diisocyanats zu den NCO-Gruppen des reaktionsschnelleren Diisocyanats größer als 6 : 1 ist.

Das Verhältnis der Isocyanat-Gruppen ist vorzugsweise größer als 10 : 1 und vor allem größer als 15 : 1.

Es kann eine Vielzahl von mehrfunktionellen Alkoholen eingesetzt werden, insbesondere primäre oder sekundäre aliphatische Alkohole mit 2 bis 6, vorzugsweise 2 bis 4 Hydroxylgruppen. Geeignet sind aliphatische Alkohole mit 2 - 4 Hydroxylgruppen pro Molekül. Es können primäre und sekundäre Alkohole eingesetzt werden: die sekundären sind bevorzugt. So können insbesondere die Umsetzungsprodukte niedermolekularer mehrfunktioneller Alkohole mit Alkylenoxiden mit bis zu 4 C-Atomen eingesetzt werden. Geeignet sind beispielsweise die Umsetzungsprodukte von Ethylenglykol, Propylenglykol, von den isomeren Butandiolen oder Hexandiolen mit Ethylenoxid, Propylenoxid und/oder Butenoxid. Ferner können die Umsetzungsprodukte trifunktioneller Alkohole wie Glycerin, Trimethylolethan und/oder Trimethylolpropan oder höher funktioneller Alkohole wie beispielsweise Pentaerythrit oder Zuckeralkohole mit den genannten Alkenoxiden eingesetzt werden.

Besonders geeignet sind Polyetherpolyole mit einem Molekulargewicht von 100 - 10 000, vorzugweise 1 000 - 5 000 und insbesondere Polypropylenglykol. So können - je nach gewünschtem Molekulargewicht - Anlagerungsprodukte von nur wenigen Mol Ethylenoxid und/oder Propylenoxid pro Mol oder aber von mehr als hundert Mol Ethylenoxid und oder Propylenoxid an niedermolekulare mehrfunktionelle Alkohole eingesetzt werden. Weitere Polyetherpolyole sind durch Kondensation von z.B. Glycerin oder Pentaerythrit unter Wasserabspaltung herstellbar. In der Polyurethan-Chemie gebräuchliche Polyole entstehen weiterhin durch Polymerisation von Tetrahydrofuran. Unter den genannten Polyetherpolyolen sind die Umsetzungsprodukte von mehrfunktionellen niedermolekularen Alkoholen mit Propylenoxid unter Bedingungen, bei denen zumindest teilweise sekundäre Hydroxylgruppen entstehen, besonders geeignet. Weitere geeignete Polyetherpolyole sind z.B. in der deutschen Offenlegungsschrift 2 559 759 beschrieben.

Für das erfindungsgemäße Verfahren sind auch Polyesterpolyole mit einem Molekulargewicht von 200 bis 10 000 geeignet. Nach einer ersten Ausführungsform können Polyesterpolyole verwendet werden, die durch Umsetzung von niedermolekularen Alkoholen, insbesondere von Ethylenglykol, Propylenglykol, Glycerin oder Trimethylolpropan mit 1 bis 50 mol Caprolacton entstehen. Weitere geeignete Polyesterpolyole sind durch Polykondensation herstellbar. So können difunktionelle und/oder trifunktionelle Alkohole mit einem Unterschuß an Dicarbonsäuren und/oder Tricarbonsäuren oder deren reaktiven Derivaten zu Polyesterpolyolen kondensiert werden. Geeignete Dicarbonsäuren sind hier Bernsteinsäure und ihre höheren Homologen mit bis zu 12 C-Atomen, ferner ungesättigte Dicarbonsäuren wie Maleinsäure oder Fumarsäure sowie aromatische Dicarbonsäuren, insbesondere die isomeren Phthalsäuren. Als Tricarbonsäuren sind Zitronensäure oder Trimellithsäure geeignet. Im Sinne der Erfindung besonders geeignet sind Polyesterpolyole aus den genannten Dicarbonsäuren und Glycerin, welche einen Restgehalt an sekundären OH-Gruppen aufweisen.

Weiterhin können Polyole auf der Basis von Polycarbonaten verwendet werden. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat oder Phosgen, erhalten werden.
Ebenfalls können als Polyolkomponente OH-Gruppen tragende Polyacrylate verwendet werden. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuß vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Schließlich können die Polyole auch auf Polybutadien, Styrol-Butadien-Kautschuk oder Nitril-Kautschuk basieren.

Bevorzugte mehrfunktionelle Alkohole zur Herstellung der PU-Prepolymere sind Diole mit 2 bis 5 C-Atomen, Triole mit 3 bis 6 C-Atomen, Tetraole mit 4 bis 8 C-Atomen, OH-funktionelle Polyester und/oder OH-funktionelle Polyether mit Molekulargewichten von bis zu 10 000, insbesondere von 1 000 bis 5 000.

Unter "zwei Diisocyanaten mit unterschiedlicher Reaktivität" werden zwei verschiedene Diisocyanate mit unterschiedlicher Reaktivität gegenüber Alkoholen verstanden. Bei der Auswahl dieser verschiedenen Diisocyanate sind folgende Beobachtungen zu berücksichtigen: Bei der Reaktion von Diisocyanaten mit Alkoholen ist die Geschwindigkeit der Umsetzung der ersten Diisocyanatgruppe wesentlich größer als die der zweiten Diisocyanatgruppe. Dies trifft insbesondere auf monocyclische Diisocyanate, aber auch auf andere Diisocyanate mit Gruppen in unterschiedlicher chemischer Umgebung, also allgemein gesprochen, auf unsymmetrische Diisocyanate zu. Es wurde weiter festgestellt, daß dicyclische Diisocyanate oder allgemeiner symmetrische Diisocyanate in ihrer Reaktionsgeschwindigkeit höher liegen als die zweite Isocyanatgruppe unsymmetrischer bzw. monocyclischer Diisocyanate.

Bei dem ersten Diisocyanat handelt es sich also um ein unsymmetrisches Diisocyanat mit zwei unterschiedlich reaktiven NCO-Gruppen. Konkrete Beispiele sind: 2,4-Toluylendiisocyanat (TDI), Isophorondiisocyanat, 2,4-Diphenylmethandiisocyanat. Bei dem zweiten Diisocyanat handelt es sich um ein symmetrisches Isocyanat, vorzugsweise um ein dicyclisches Diisocyanat. Wichtig ist, daß die Reaktivität ihrer Isocyanatgruppen gegenüber Hydroxylgruppen höher liegt als die der endständigen Isocyanatgruppen des einseitig umgesetzten unsymmetrischen Diisocyanates (Reaktiwerdünners). Somit sind in erster Linie Diaryldiisocyanate geeignet, bevorzugt sind z.B. 4,4'-Diphenylmethandiisocyanat (MDI) und/oder substituierte 4,4-Diphenylmethandiisocyanate.
Zur Herstellung des erfindungsgemäßen PU-Prepolymeren wird also bevorzugt als reaktionsfreudiges Diisocyanat ein symmetrisches aromatisches Diisocyanat eingesetzt, insbesondere MDI, und als reaktionsträgeres Diisocyanat ein unsymmetrisches Isocyanat, insbesondere TDI.
Die Konzentration der unterschiedlich reaktiven NCO-Gruppen in dem erfindungsgemäßen Prepolymeren wird durch Kemresonanzspektroskopie (NMR) bestimmt.

Mit "monomerenarm" ist eine niedrige Konzentration der Ausgangsdiisocyante zu verstehen. Ihre Konzentration liegt unter zwei, vorzugsweise unter einem, inbesondere unter 0,5 Gew.-%, bezogen auf das Prepolymer. Die Konzentration wird durch Gaschromatographie bzw. HPLC bestimmt.

Das erfindungsgemäße PU-Prepolymer wird hergestellt, indem man
- in einem ersten Reaktionsschritt die Diisocyanate mit NCO-Gruppen unterschiedlicher Reaktivität (unsymmetrische Diisocyanate) mit mehrfunktionellen Alkoholen im Verhältnis OH : NCO zwischen 4 und 0,55 umsetzt und nach Abreaktion praktisch aller schnellen NCO-Gruppen mit einem Teil der vorhandenen OH-Gruppen
- in einem zweiten Reaktionsschritt ein im Vergleich zu den weniger reaktiven NCO-Gruppen des Isocyanats aus Reaktionsschritt 1 reaktiveres Diisocyanat (symmetrisches Diisocyanat) im Unterschuß, bezogen auf noch freie OH-Gruppen, zusetzt, wobei gewünschtenfalls übliche Katalysatoren und/oder erhöhte Temperaturen angewendet werden.

Erfindungsgemäß wird also ein mehrfunktioneller Alkohol mit dem unsymmetrischen Diisocyanat im Verhältnis OH : NCO zwischen 4 und 0,55 in einer ersten Reaktionsstufe umgesetzt, bis die reaktiveren NCO-Gruppen des Diisocyanats praktisch vollständig mit einem Teil der verfügbaren OH-Gruppen reagiert haben, aber eine Reaktion der weniger reaktiven Gruppen noch nicht oder nicht wesentlich stattgefunden hat. Dieser Reaktionszeitpunkt läßt sich durch analytische Verfolgung des Reaktionsgeschehens bestimmen. Das

Reaktionsgeschehen kann dabei spektroskopisch (IR) oder titrimetrisch verfolgt werden. Die Einsatzmolverhältnisse werden nach dem erfindungsgemäßen Verfahren so gewählt, daß nach Abreaktion der reaktiveren isocyanatgruppen noch freie OH-Gruppen vorliegen.

In das so gewonnene niedrigviskose Reaktionsgemisch der ersten Reaktionsstufe wird dann in der zweiten Reaktionsstufe ein symmetrisches Diisocyanat gegeben, welches so ausgewählt ist, daß seine Reakivität höher ist als die der nun polymergebundenen NCO-Gruppen des unsymmetrischen Diisocyanats.

Vereinfacht kann gesagt werden, daß nach der Lehre der Erfindung in einem niedrig viskosen Reaktionsmedium, das OH-funktionelle und NCO-funktionelle Bestandteile enthält, eine Reaktion zwischen den OH-funktionellen Bestandteilen und einem symmetrischen Diisocyanat zu einem Polyurethan-Prepolymeren durchgeführt wird.

Im erfindungsgemäßen Verfahren wird das Produkt der ersten Reaktionsstufe als Reaktivverdünner ausgenutzt, ohne daß es zu einer Reaktion zwischen den OH-Gruppen und den langsam reagierenden polymergebundenen NCO-Gruppen aus dem unsymmetrischen Diisocyanat käme.

Um Umsetzungsprodukte eines unsymmetrischen Diisocyanates, insbesondere von 2,4-Toluylendiisocyanat mit mehrfunktionellen Alkoholen zu erhalten, welche erfindungsgemäß in der zweiten Reaktionsstufe als Lösungsmittel "oder Reaktivverdünner" eingesetzt werden können, ist es wichtig, ein bestimmtes Verhältnis zwischen Hydroxylgruppen und Isocyanatgruppen einzuhalten. So entstehen geeignete Produkte, die nach Abreaktion der reaktiveren NCO-Gruppen noch OH-Gruppen enthalten, wenn die Anzahl der OH-Gruppen geteilt durch die Anzahl der Isocyanatgruppen zwischen 4 und 0,55 eingestellt wird, vorzugsweise zwischen 1 und 0,6.

Zur Durchführung der zweiten Stufe des erfindungsgemäßen Verfahrens werden in den OH- und NCO-funktionellen Reaktionsprodukten der ersten Reaktionsstufe als Reaktiverdünner symmetrische, insbesondere dicyclische Diisocyanate mit den restlichen OH-Gruppen zur Reaktion gebracht. Für die Reaktion der zweiten Stufe beträgt das Molverhältnis OH-Gruppen, ausgedrückt als Quotient der OH-Gruppen geteilt durch Isocyanatgruppen mehr als 1,0, bevorzugt 1,1 bis 12, bezogen auf restliche OH-Gruppen.

Zur Durchführung des erfindungsgemäßen Verfahrens ist es bevorzugt, die Umsetzung der Diisocyanate mit mehrfunktionellen Alkoholen bei erhöhter Temperatur durchzuführen. Geeignet sind Temperaturen zwischen 40 und 120 °C, vorzugsweise zwischen 80 und 95 °C. Bei Laboransätzen (ca. 1 kg) hat sich eine Reaktionszeit von ca. 1 Stunde für die erste Reaktionsstufe und von 2-20 Stunden für die zweite Reaktionsstufe als vorteilhaft erwiesen. Die Temperatur betrug dabei ca. 80 °C. In jedem Falle ist das Reaktionsende erreicht, wenn die Anzahl der Isocyanatgruppen nicht weiter absinkt. Dies kann analytisch durch Titration der Isocyanatgruppen festgestellt werden und ist beispielsweise nach 2 Stunden bis 5 Tagen bei Raumtemperatur der Fall.

Das so hergestellte PU-Prepolymer wird zweckmäßigerweise zusammen mit üblichen Härtern und/oder Feuchtigkeit, gewünschtenfalls in Gegenwart von organischen Lösungsmitteln und üblichen Beschleunigern, zum Verkleben von Kunststoffgegenständen und Metallen verwendet, insbesondere von Folien, wobei die Verklebung vorzugsweise bei Temperaturen zwischen 20 und 120 °C stattfindet.

Unter Härter sind niedermolekulare oder oligomere mehrfunktionelle Verbindungen zu verstehen, die bezüglich Art und Anzahl der funktionellen Gruppen so gewählt sind, daß sie mit den Isocyanat-Gruppen des Prepolymers reagieren und dieses vernetzen. Vorzugsweise enthalten die Härter Amino-, Carbonsäure- und Epoxid-Gruppen.

Es können auch Haftvermittler eingesetzt werden insbesondere zur Verbesserung der Chemikalienbeständigkeit und der Füllgutbeständigkeit bei Metallen. Konkret seien Titanate und Si-Verbindungen genannt, insbesondere Siloxane.

Das erfindungsgemäße PU-Prepolymer zeichnet sich durch folgende positiven bzw. vorteilhaften Eigenschaften aus:
- Zur Aushärtung unter Raumtemperatur und normaler Luftfeuchtigkeit werden nur 7 anstelle von 14 Tagen benötigt. Dieses Ergebnis ist überraschend, da das erfindungsgemäße PU-Prepolymer vielmehr an weniger reaktiven NCO-Gruppen hat als das bekannte gemäß der EP 150 444.
- Die Anfangshaftung ist mit 1,6 N/15 mm deutlich höher als bei dem bekannten PU-Prepolymeren mit weniger als 0,3 bis 0,6 N/15 mm. Die Anfangshaftung wurde unter folgenden Bedingungen gemessen: Ein 15 mm breiter Verbundstreifen wird im T-peel-Test unter 2 x 90 °C Abzugswinkel mit 100 mm/min Abzugsgeschwindigkeit direkt nach der Verklebung gemessen.
- Der Monomerengehalt an nicht umgesetzten Diisocyanaten kann deutlich unter 1 Gew.-% liegen.
- Auch der Anteil an nicht flüchtigen Diisocyanaten ist niedriger, was an der beschleunigten Migratfreiheit zu erkennen ist. Bei dem erfindungsgemäßen System kann sie nach 4 Tagen festgestellt werden, bei dem bekannten System nach 10 bis 14 Tagen. Die Migratfreiheit wird folgendermaßen festgestellt (siehe Deutsche Lebensmittel-Rundschau, 87 (1991), Seiten 280 und 281): Ein verschweißter Flachbeutel wird mit 3 %iger Essigsäure gefüllt bei 70°C gelagert. Der Beutelinhalt wird nach 2 h Lagerzeit diazotiert, einer Azokupplung unterzogen und an einer C₁₈-Säule aufkonzentriert. Anschließend wird photometrisch die Konzentration bestimmt. Die Migration von nicht flüchtigen Diisocyanaten und anderen Verbindungen kann zu Störungen führen, z.B. beim Versiegeln verklebter Folienverbunde, insbesondere bei CPA/EVA-Laminaten.
- Die Viskositätszunahme bei 70 °C ist in Abhängigkeit von der Zeit bei den erfindungsgemäßen PU-Prepolymeren wesentlich flacher als bei dem bekannten PU-Prepolymeren. Diese flachere Topfzeitkurve erleichtert die Verarbeitung, indem eine längere Verarbeitungszeit gegeben ist.

Die erfindungsgemäßen Prepolymeren eignen sich in Substanz oder als Lösung in organischen Lösungsmitteln zum Verkleben von Kunststoffen, Metallen und Papieren, insbesondere zum Kaschieren von Textilien, Aluminium und Kunststoff-Folien sowie Metall- bzw. Oxid-bedampften Folien und Papieren. Hierbei können übliche Härter, etwa mehrfunktionelle höhermolekulare Alkohole zugesetzt werden (2-Komponenten-Systeme) oder aber Oberflächen mit definiertem Feuchtigkeitsgehalt mit den erfindungsgemäßen Produkten direkt verklebt werden. Mit den erfindungsgemäßen Produkten hergestellte Folienverbunde zeigen hohe Verarbeitungssicherheit beim Heißsiegeln. Dies ist möglicherweise auf den stark verminderten Anteil migrationsfähiger niedermolekularer Produkte in den Prepolymeren zurückzuführen.
Außerdem können die erfindungsgemäßen Prepolymeren auch als Extrusions-, Druck- und Metallisierungs-Primer sowie zur Heißsiegelung verwendet werden.

Die Erfindung wird nun anhand von Beispielen im einzelnen erläutert:

### Vergleichsbeispiel

In einem Dreihalskolben, versehen mit Rührer, Thermometer und Trockenrohr, wurden 411,7 g eines Polypropylenglykols (OHZ 109 mg KOH/g) mit 104,4 g 2,4-Toluylendiisocyanat vermischt und unter Rühren aufgeheizt. Vom Erreichen einer Massetemperatur von 90 °C ab war nach einer halben Stunde ein NCO-Titrationswert von 4,56 % erreicht, womit der theoretische Wert von 4,88 % unwesentlich unterschritten war. Nach Zugabe von 25 g 4,4'-Diphenylmethandiisocyanat wurde bei 90 °C zwei Stunden lang weitergerührt, wonach ein NCO-Gehalt von 4,61 % (theor. 4,65 %) erreicht war.
- % monomeres TDI: 0,03: % NCO = 4,7 (theor. 4,77)
- % monomeres MDI : 2,5: OH/NCO (1) = 1 : 1
- Viskosität: 1980 mPas/60 °C: OH/NCO (2) = 1 : 1,6, bezogen auf Rest OH aus Stufe 1.

### Erfindungsgemäßes Beispiel 1)

In einem Dreihalskolben, versehen mit Rührer, Thermometer und Trockenrohr, wurden 575,3 g eines Polypropylenglykols (OHZ 109 mg KOH/g) und 156,9 g eines Polypropylenglykols (OHZ 267 mg KOH/g) mit 238,5 g 2,4-Toluylendiisocyanat vermischt und unter Rühren aufgeheizt. Vom Erreichen einer Massetemperatur von 90 °C ab war nach einer halben Stunde ein NCO-Titrationswert von 4,5 % unwesentlich unterschritten. Nach Zugabe von 28 g 4,4'-Diphenylmethandiisocyanat wurde bei 90 °C zwei Stunden lang weitergerührt, wonach ein NCO-Gehalt von 4,57 % (theor. 4,59 %) erreicht war.
- % monomeres TDI: 0,03: % NCO = 4,57 (theor. 4,59)
- % monomeres MDI: 0,2: OH/NCO (1) = 0,68: 1
- Viskosität: 1000 mPas/70 °C: OH/NCO (2) = 10 : 1, bezogen auf Rest OH aus Stufe 1.

### Erfindungsgemäßes Beispiel 2

- Einwaage: 524,0 g Polyester (OHZ: 137)
106,0 g PPG (OHZ: 113)
106,0 g PPG (OHZ: 267)
244,0 g TDI (NCO: 48,0 %)
21,0 g MDI (NCO: 33,5 %)
- Ausführung:: Apparatur
Dreihalskolben-Rührapparatur mit Kontaktthermometer,
Rührer mit Rührmotor, Trockenrohr und Heizpilz.
Durchführung:
Der Polyester und die beiden PPG wurden vorgelegt und homogen gemischt. Dann gab man das TDI hinzu und heizte auf 50 °C hoch. Die Temperatur stieg durch die exotherme
Reaktion. Die Temperatur wurde nun bei 90 °C gehalten durch Kühlen.
Endpunkt der Reaktion bei NCO = 5,4 %
Nun gab man das MDI hinzu und heizte auf 95 °C hoch. Bei dieser Temperatur ließ man 1 Stunde rühren.
NCO nach 1 Std.: 4,3 % (Soll: 4,3 %)
Der heiße Ansatz wurde abgefüllt.
MDI: 0,4 % (Soll: < 1,0 %)
TDI: 0,03 % (Soll: < 0,1 %)
NCO: 4,3
Viskosität: ≈ 5 700 mPas [Brookfield DVII (Thermosell)/Sp.27/20 U/min/70 °C]

### Verbundhaftung:

Benötigt wird eine Universal-Zugprüfmaschine mit Synchron-Schreiber für die Meßdiagramme. Der Kraftbereich sollte zwischen 10 und 50 N liegen und nach dem zu erwartenden Haftniveau eingestellt werden.

Mit einem Streifenschneider werden 15 mm breite Streifen hergestellt. Vor dem Einspannen der Streifen werden sie etwas getrennt.
Die Abzugsgeschwindigkeit beträgt 100 mm/min, der Abzugswinkel 90 ° und die Abzugslänge 5 bis 10 cm je nach Schwankungsbereich.
Als Ergebnis wird die Verbundhaftung in N/15 mm angegeben und das Trennbild visuell beurteilt (adhäsiver oder kohäsiver Bruch; Verbleib des Klebstoffes).

## Patentansprüche

1. Monomerenarmes PU-Prepolymer mit freien NCO-Gruppen, herstellbar aus mehrwertigen Alkoholen und mindestens zwei Diisocyanaten unterschiedlicher Reaktivität, dadurch gekennzeichnet, daß das Verhältnis NCO-Gruppen des partiell reaktionsträgeren Diisocyanates zu den NCO-Gruppen des reaktionsfreudigeren Diisocyanates größer als 6 : 1 ist.

2. PU-Prepolymer nach Anspruch 1, dadurch gekennzeichnet, daß das Verhältnis der NCO-Gruppen des reaktionsträgeren Diisocyanates zu den NCO-Gruppen des reaktionsfreudigeren Diisocyanates größer als 15 : 1 ist.

3. PU-Prepolymer nach Anspruch 1 oder 2, dadurch gekennzeichnet, daß als mehrfunktionelle Alkohole primäre oder sekundäre aliphatische Alkohole mit 2 bis 6 Hydroxylgruppen eingesetzt werden.

4. PU-Prepolymer nach mindestens einem der vorangegangenen Ansprüche, dadurch gekennzeichnet, daß als mehrfunktionelle Alkohole Diole mit 2 bis 5 C-Atomen, Triole mit 3 bis 6 C-Atomen, Tetraole mit 4 bis 8 C-Atomen, OH-funktionelle Poly-Ester und/oder OH-funktionelle Polyether mit Molekulargewichten von bis zu 10 000 eingesetzt werden.

5. PU-Prepolymer nach mindestens einem der vorangegangenen Ansprüche, dadurch gekennzeichnet, daß als reaktionsfreudiges Diisocyanat ein symmetrisches aromatisches Diisocyanat eingesetzt wird.

6. PU-Prepolymer nach mindestens einem der vorangegangenen Ansprüche, dadurch gekennzeichnet, daß als reaktionsträgeres Diisocyanat ein unsymmetrisches Isocyanat eingesetzt wird.

7. Verfahren zur Herstellung des PU-Prepolymeren nach mindestens einem der vorangegangenen Ansprüche, dadurch gekennzeichnet, daß man
- in einem ersten Reaktionsschritt das Diisocyanat mit NCO-Gruppen unterschiedlicher Reaktivität (unsymmetrisches Diisocyanat) mit mehrfunktionellen Alkoholen im Verhältnis OH : NCO zwischen 4 und 0,55 umsetzt und nach Abreaktion praktisch aller schnellen NCO-Gruppen mit einem Teil der vorhandenen OH-Gruppen
- in einem zweiten Reaktionsschritt ein im Vergleich zu den weniger reaktiven NCO-Gruppen des Isocyanats aus Reaktionsschritt 1 ein reaktiveres Diisocyanat (symmetrisches Diisocyanat) im Unterschuß, bezogen auf noch freie OH-Gruppen, zusetzt,
wobei gewünschtenfalls übliche Katalysatoren und/oder erhöhte Temperaturen angewendet werden.

8. Verfahren nach Anspruch 7, dadurch gekennzeichnet, daß die beiden Reaktionsschritte bei Temperaturen zwischen 40 und 120 °C durchgeführt werden.

9. Verwendung des PU-Prepolymeren nach mindestens einem der vorangegangenen Ansprüche zusammen mit üblichen Härtern und/oder Feuchtigkeit, gewünschtenfalls in Gegenwart von organischen Lösungsmitteln und üblichen Beschleunigern und Additiven, zum Verkleben von Kunststoffgegenständen, Metallen und Papieren.

10. Verwendung nach Anspruch 9, dadurch gekennzeichnet, daß man die Verklebung bei Temperaturen zwischen RT und 120 °C durchführt.

## Claims

1. A low-monomer PU prepolymer containing free NCO groups obtainable from polyhydric alcohols and at least two diisocyanates differing in their reactivity, characterized in that the ratio of NCO groups of the partly slower-reacting diisocyanate to the NCO groups of the faster-reacting diisocyanate is greater than 6:1.

2. A PU prepolymer as claimed in claim 1, characterized in that the ratio of the NCO groups of the slower-reacting diisocyanate to the NCO groups of the faster-reacting diisocyanate is greater than 15 : 1.

3. A PU prepolymer as claimed in claim 1 or 2, characterized in that primary or secondary aliphatic alcohols containing 2 to 6 hydroxyl groups are used as the polyhydric alcohols.

4. A PU prepolymer as claimed in at least one of the preceding claims, characterized in that the polyhydric alcohols used are selected from diols containing 2 to 5 carbon atoms, triols containing 3 to 6 carbon atoms, tetraols containing 4 to 8 carbon atoms, OH-functional esters and/or OH-functional polyethers with molecular weights of up to 10,000.

5. A PU prepolymer as claimed in at least one of the preceding claims,
characterized in that a symmetrical aromatic diisocyanate is used as the faster-reacting diisocyanate.

6. A PU prepolymer as claimed in at least one of the preceding claims,
characterized in that a non-symmetrical isocyanate i s used as the slower-reacting diisocyanate.

7. A process for the production of the PU prepolymer claimed in at least one of the preceding claims, characterized in that
- in a first reaction step, the diisocyanates containing NCO groups differing in their reactivity (non-symmetrical diisocyanates) are reacted with polyhydric alcohols in an OH:NCO ratio of 4 to 0.55:1 and, after virtually all the fast NCO groups have reacted off with some of the OH groups present,
- a diisocyanate (symmetrical diisocyanate) more reactive than the sluggish NCO groups of the isocyanate from reaction step 1 is added in a second reaction step in less than the equivalent quantity, based on free OH groups,
optionally at elevated temperatures and/or in the presence of typical catalysts.

8. A process as claimed in claim 7, characterized in that the two reaction steps are carried out at temperatures of 40 to 120°C.

9. The use of the PU prepolymer claimed in at least one of the preceding claims together with conventional hardeners and/or moisture, optionally in the presence of organic solvents and typical accelerators and additives, for bonding plastic articles, metals and paper,

10. The use claimed in claim 9, characterized in that bonding is carried out at temperatures between room temperature and 120°C.

## Revendications

1. Prépolymère polyuréthanne (PU) pauvre en monomères, à groupes NCO libres, pouvant être préparé à partir d'alcools polyhydroxylés et d'au moins deux diisocyanates à réactivité différente,
caractérisé en ce que
le rapport des groupes NCO du diisocyanate partiellement moins réactif aux groupes NCO du diisocyanate plus réactif est supérieur à 6:1.

2. Prépolymère PU selon la revendication 1,
caractérisé en ce que
le rapport des groupes NCO du diisocyanate moins réactif aux groupes NCO du diisocyanate plus réactif est supérieur à 15:1.

3. Prépolymère PU selon la revendication 1 ou 2,
caractérisé en ce que
comme alcools polyfonctionnels, on utilise des alcools aliphatiques primaires ou secondaires ayant 2 à 6 groupes hydroxyle.

4. Prépolymère PU selon au moins l'une quelconque des revendications précédentes,
caractérisé en ce que
comme alcools polyfonctionnels, on utilise des diols ayant de 2 à 5 atomes de carbone, des triols ayant de 3 à 6 atomes de carbone, des tétraols ayant de 4 à 8 atomes de carbone, des polyesters à fonction OH et/ou des polyéthers à fonction OH, ayant des masses moléculaires allant jusqu'à 10 000.

5. Prépolymère PU selon au moins l'une quelconque des revendications précédentes,
caractérisé en ce qu'
on utilise comme diisocyanate très réactif un diisocyanate aromatique symétrique.

6. Prépolymère PU selon au moins l'une quelconque des revendications précédentes,
caractérisé en ce qu'
on utilise comme diisocyanate moins réactif un isocyanate asymétrique.

7. Procédé pour la préparation du prépolymère PU selon au moins l'une quelconque des revendications précédentes,
caractérisé en ce qu'
- on fait réagir, dans une première étape de réaction, le diisocyanate à groupes NCO de réactivité différente (diisocyanate asymétrique) avec des alcools polyfonctionnels en un rapport OH:NCO compris entre 4 et 0,55, et, une fois terminée la réaction de pratiquement tous les groupes NCO réagissant rapidement avec une partie des groupes OH présents,
- on ajoute, dans une seconde étape de réaction, un diisocyanate plus réactif (diisocyanate symétrique) en défaut par comparaison aux groupes NCO moins réactifs de l'isocyanate provenant de l'étape de réaction 1, par rapport aux groupes OH encore libres,
en utilisant éventuellement des catalyseurs usuels et/ou des températures élevées.

8. Procédé selon la revendication 7,
caractérisé en ce que
les deux étapes de réactions sont effectuées à des températures comprises entre 40 et 120°C.

9. Utilisation du prépolymère PU selon au moins l'une quelconque des revendications précédentes, conjointement avec des durcisseurs usuels et/ou de l'humidité, si on le désire en présence de solvants organiques et d'accélérateurs et additifs usuels, pour le collage d'objets en matière plastique, de métaux et de papiers.

10. Utilisation selon la revendication 9,
caractérisée en ce qu'
on effectue le collage à des températures comprises entre la température ambiante et 120°C.
